**Europäisches Patentamt**

(19) **European Patent Office**

**Office européen des brevets**

(11) Veröffentlichungsnummer: **0 150 451**
A2

(12) ## EUROPÄISCHE PATENTANMELDUNG

(21) Anmeldenummer: **84115884.3**

(22) Anmeldetag: **20.12.84**

(51) Int. Cl.⁴: **F 16 J 13/06**

(30) Priorität: **30.12.83 SE 8307230**

(43) Veröffentlichungstag der Anmeldung: **07.08.85**
**Patentblatt 85/32**

(84) Benannte Vertragsstaaten: **DE FR GB IT**

(71) Anmelder: **AB ASEA-ATOM, S-721 83 Västeras (SE)**

(72) Erfinder: **Borrman, Bo, Rörverksgatan 16,**
**S-724 74 Västeras (SE)**
Erfinder: **Puggioli, Roberto, Stadshagsvägen 44,**
**S-724 65 Västeras (SE)**

(74) Vertreter: **Boecker, Joachim, Dr.-Ing.,**
**Rathenauplatz 2-8, D-6000 Frankfurt a.M. 1 (DE)**

(54) **Flexible ringförmige Dichtungsanordnung für einen Hochdruckbehälter.**

(57) Flexible ringförmige Dichtungsanordnung für einen Hochdruckbehälter zur Dichtung einer ringförmigen Durchtrittsöffnung zwischen einem Hochdruckbehälter (2) und einem auf dem Hochdruckbehälter angeordneten ringförmigen Deckel (3). Die Dichtungsanordnung enthält zwei koaxial angeordnete massive Ringe (17, 18), die einen ringförmigen Spalt zwischen einander bilden. Ein oberer und ein unterer geschlitzter hohler Metallring (22, 21) sind mit ihren Schlitzkanten an den massiven Ringen (17, 18) derart angeschlossen, daß der zwischen den Ringen (17, 18) vorhandene Spalt die Innenräume der beiden hohlen Ringe (21, 22) miteinander verbindet.

0150451
11.12.1984
21 533 PE

AB ASEA-ATOM
Västeras/Schweden

Flexible ringförmige Dichtungsanordnung für einen
Hochdruckbehälter"

Die vorliegende Erfindung betrifft eine flexible ringförmige
Dichtungsanordnung für einen Hochdruckbehälter gemäß dem
Oberbegriff des Anspruches 1. Eine solche Dichtungsanordnung
ist im wesentlichen bekannt aus der US-A-3 062 401.

Bei der aus der vorgenannten Patentanmeldung bekannten Dichtungsanordnung enthält der flexible Ringabschnitt nur einen
einzigen geschlitzten hohlen Ring. Der Hohlraum dieses
Ringes steht mit dem Hochdruckfluidum im Druckbehälter in
Verbindung. Diese bekannte Dichtungsanordnung hat den
Nachteil, daß bei einer Undichtigkeit des hohlen Ringes über
die undichte Stelle eine pneumatische Verbindung zwischen
der Hochdruckseite und der Niederdruckseite der Dichtungsanordnung gebildet wird.

Der Erfindung liegt die Aufgabe zugrunde, eine Dichtungsanordnung der eingangs genannten Art zu entwickeln, bei
welcher ein einfacher Bruch des zur Dichtungsanordnung
gehörenden hohlen Ringes nicht zu einer Verbindung zwischen
der Hochdruck- und Niederdruckseite führt.

Zur Lösung dieser Aufgabe wird eine Dichtungsanordnung gemäß
dem Oberbegriff des Anspruches 1 vorgeschlagen, welche erfindungsgemäß die im kennzeichnenden Teil des Anspruches 1
genannten Merkmale hat.

Eine vorteilhafte Ausgestaltung der Dichtungsanordnung gemäß der Erfindung ist im Anspruch 2 genannt.

Neben dem sich aus der genannten Aufgabenstellung ergebenden Vorteil hat die Dichtungsanordnung gemäß der Erfindung ferner den Vorteil, daß der von dem Hochdruckfluidum auf den hohlen Ring ausgeübten Druckkraft mehr oder weniger durch ein im hohlen Ring vorhandenes Fluidum entgegengewirkt werden kann. Ferner ermöglicht es die Erfindung, daß bei einer eventuellen Undichtigkeit des von dem Hochdruckfluidum beanspruchten hohlen Ringes die Gewinnung einer deutlichen Anzeige über den Zustand der Dichtung möglich ist, und zwar zu einer Zeit, in der die Dichtungsanordnung noch ihre Dichtungsfunktion erfüllt. Dies wird dadurch erreicht, daß ein an den hohlen Ring pneumatisch oder hydraulisch angeschlossener hohler Körper (Drucksensor) vom Druck des Hochdruckfluidums beaufschlagt wird, wenn ein Leck der vorgenannten Art eintritt.

Die Dichtungsanordnung gemäß der Erfindung ist besonders für einen Druckbehälter geeignet, bei welchem sich die Höhenlage des Deckels stark in Abhängigkeit mit dem im Druckbehälter herrschenden Druck verändert, z.B. bei einem Druckbehälter, der nach dem aus der SE-AS 435 981 bekannten Prinzip aufgebaut ist.

Anhand des in den Figuren gezeigten Ausführungsbeispiels soll die Erfindung näher erläutert werden. Es zeigen

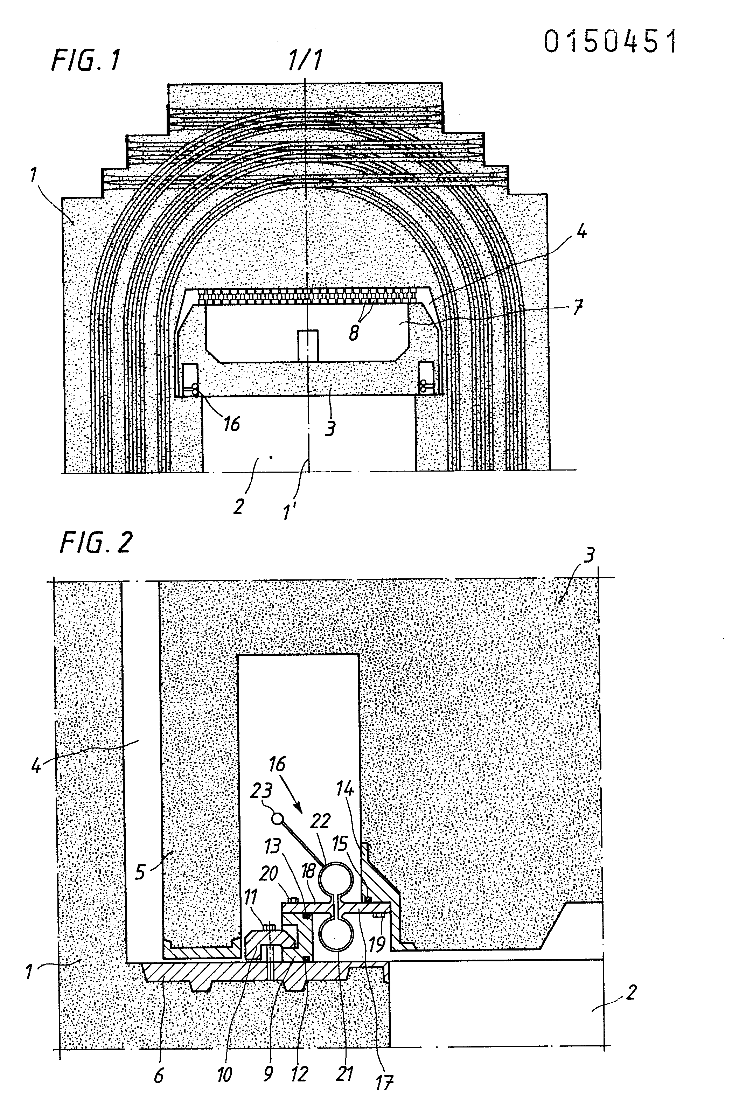

Figur 1 einen partiellen Vertikalschnitt durch einen Druckbehälter mit zugehörigem Deckel, wobei eine Dichtungsanordnung gemäß der Erfindung zwischen dem Druckbehälter und dem Deckel dichtet,

Figur 2 einen Querschnitt durch die ringförmige Dichtungsanordnung in Figur 1 in vergrößerter Darstellung.

In den Figuren bezeichnet 1 einen hohlen Betonkörper mit
einem im wesentlichen kreiszyndrischen Hochdruckraum 2.
Dieser umschließt mittels eines aus Spannbeton bestehenden
Deckels 3 einen nicht dargestellten Reaktorkern sowie ein
Hochdruckfluidum, das aus einer Wasserlösung mit einem Druck
von mindestens 20 bar besteht. Der Betonkörper 1 begrenzt
ferner einen über dem Hochdruckraum 2 vorhandenen Hilfsraum
4, der ein Niederdruckfluidum in Form von Luft unter
atmosphärischem Druck enthält. Sowohl der Hilfsraum 4 wie
auch der Hochdruckraum 2 haben eine in Bezug auf die
vertikale Rotationsachse 1` rotationssymmetrisch Form. Der
hohle Betonkörper 1 ist mit einem horizontalen Tunnel
versehen, durch welchen der Deckel 3 in den Hilfsraum 4
hinein und aus diesem herausbewegt werden kann. Die Figuren
zeigen den Druckbehälter bei normalem Betriebsdruck im Hochdruckraum 2. Bei atmosphärischem Druck im Hochdruckraum
steht der Deckel 3, der mehrere vertikale Schenkel 5 hat,
auf einem horizontalen, in den Betonkörper 1 eingebetteten
metallischen Ring 6. Der Deckel 3 hat mehrere parallele in
je einer Vertikalebene liegende kraftübertragende Wände 7,
von denen jede mehrere druckkraftübertragende Elemente 8
trägt, welche bei Betriebsdruck im Hochdruckraum 2 die von
unten auf den Deckel 4 wirkende Kraft auf eine Deckenfläche
in dem Hilfsraum 4 übertragen. Ein kreisringförmiger Halter
9 für Dichtungsringe ist an dem im Beton eingebetteten
Metallring mittels mehrerer Klammerstücken 10 festgeklemmt.
Die Klammerstücken 10 werden durch je einen in den Metallring 6 eingeschraubten Gewindebolzen 11 nach unten gezogen.
Der Halter 9 hat eine nach unten gerichtete kreisförmige
Nut, in der ein Dichtungsring 12 angeordnet ist, der vorzugsweise aus Gummi oder dergleichen oder alternativ aus
Metall besteht. Ferner hat der Halter eine nach oben gerichtete kreisförmige Nut, in der ein Dichtungsring 13 angebracht ist. Der Deckel 3 ist unten mit einem in den Beton eingebetteten kreisförmigen metallischen Deckelring 14 versehen, in welchem eine nach unten gerichtete Nut angeordnet ist, in der ein Dichtungsring 15 liegt. Die Dichtungsringe 13 und 15 bestehen vorzugsweise aus dem gleichen Material wie der Dichtungsring 12.

Eine ringförmige Dichtungsanordnung 16 dient dazu, eine ringförmige Durchtrittsöffnung zwischen dem Deckelring 14 und dem kreisförmigen Halter 9 abzudichten. Die Dichtungsanordnung 16 enthält einen steifen, metallischen, im wesentlichen in einer Horizontalebene liegenden radial inneren, kreisringförmigen Abschnitt 17 und einen steifen, metallischen radial äußeren kreisringförmigen Abschnitt 18, der im Verhältnis der gemeinsamen, vertikalen Symmetrieachse 1' koaxial um den Abschnitt 17 angeordnet ist. Der ringförmige Abschnitt 17 ist mit Hilfe mehrerer im Deckelring 14 eingeschraubter Gewindebolzen 19 gegen den Dichtungsring 15 gepreßt. Der ringförmige Abschnitt 18 ist mit Hilfe mehrerer in den Halter 9 eingeschraubter Gewindebolzen 20 gegen den Dichtungsring 13 gepreßt. Außerdem hat die ringförmige Dichtungsanordnung 16 einen flexiblen, ringförmigen Mittelabschnitt, der zwei hohle, kreisförmige metallische Ringe 21 und 22 mit kreisförmigem Querschnitt enthält, die derart längs der gesamten Ringlänge aufgeschlitzt sind, daß der Radius des Spaltes jedes Ringes 21, 22 genauso oder ungefähr genauso wie der Schwerpunktradius des Ringquerschnittes im Verhältnis zu der Achse 1' liegt. Jeder der beiden Ringe 21 und 22 ist mit einer Kante des ringförmigen Spaltes an der Außenkante des ringförmigen Abschnittes 17 festgeschweißt und mit der anderen Kante des ringförmigen Spaltes an der Innenkante des ringförmigen Abschnittes 18 festgeschweißt. Die Innenräume der beiden Ringe 21, 22 stehen also über ihre Schlitze und den zwischen den beiden ringförmigen Abschnitten 17 und 18 gebildeten Spalt miteinander in Verbindung.

-5-

Die Dichtungsanordnung hat eine Hochdruckfläche, d.h. ein Fläche, die mit dem im Hochdruckraum 2 befindlichen Hochdruckfluidum in Kontakt steht. Diese Hochdruckfläche besteht teilweise aus der äußeren Fläche des Ringes 21. Die äußere Fläche des Ringes 22 ist ein Teil der Niederdruckfläche der Dichtungsanordnung, d.h. der Fläche, die mit einem Niederdruckfluidum in Kontakt kommt, also mit Luft von atmosphärischem Druck.

Um die Druckbeanspruchung des Ringes 21 zu veringern, können die Ringe 21 und 22, die mittels der Abschnitte 17 und 18 pneumatisch miteinander verbunden sind, vorzugsweise mit einem Gas gefüllt sein, das bei 100 Grad C unter mindestens einem Druck steht, der 50 % größer als der atmospärische Druck der Umgebung ist. Das Gas kann gesättigt oder ungesättigt sein.

Mit dem Hohlraum des Ringes 22 ist ein Druckmesser 23 verbunden. Dieser dient dazu, bei einer durch eine mögliche Undichtigkeit des Ringes 21 verursachten Druckerhöhung ein elektrisches Signal zu geben.

Patentansprüche

1. Flexible ringförmige Dichtungsanordnung für einen Hochdruckbehälter zur Dichtung zwischen dem mit vertikaler Symmetrieachse aufgebauten Druckbehälter und einem auf dem Druckbehälter angeordneten Deckel, wobei sich auf der einen Seite der Dichtungsanordnung ein Hochdruckfluidum und auf der anderen Seite der Dichtungsanordnung ein Niederdruckfluidum befindet, mit einer in Kontakt mit dem Hochdruckfluidum stehenden Hochdruckfläche und mit einer in Kontakt mit dem Niederdruckfluidum stehenden Niederdruckfläche, mit einem ersten und einem zweiten steifen, ringförmigen Abschnitt (17 bzw. 18) und mit einem koaxial mit den Abschnitten (17, 18) angeordneten ersten hohlen Ring (22), dessen Außenwandfläche zu der Niederdruckfläche gehört und der derart geschlitzt ist, daß er längs seines Umfanges einen ersten kreisförmigen Spalt hat, dessen Kanten mit je einem der genannten ringförmigen Abschnitten (17, 18) druckdicht mechanisch verbunden sind, d a d u r c h   g e k e n n z e i c h n e t, daß der eine der steifen, ringförmigen Abschnitte (17, 18) radial innerhalb des anderen liegt, daß ein zweiter hohler Ring (21) mit einem zweiten kreisförmigen Spalt vorhanden ist, daß die Außenwandfläche des zweiten Ringes (21) zu der Hochdruckfläche gehört, daß die Kanten des zweiten Spaltes mit je einem der ringförmigen Abschnitte (17, 18) druckdicht mechanisch verbunden sind und daß der Hohlraum des ersten Ringes (22), mittels der steifen ringförmigen Abschnitte (17, 18) pneumatisch mit dem Hohlraum des zweiten Ringes (21) verbunden ist.

2. Dichtungsanordnung nach Anspruch 1, d a d u r c h   g e k e n n z e i c h n e t, daß die hohlen Ringe (21, 22) mit einem Gas gefüllt sind, dessen Druck bei 100 Grad C mindestens 50 % größer als der atmosphärische Druck der Umgebung ist.

0150451
11.12.1984
21 533 PE

3. Dichtungsanordnung nach einem der vorhergehenden Ansprüche, d a d u r c h   g e k e n n z e i c h n e t, daß sie bei einem Druckbehälter für einen Kernreaktor verwendet wird.

FIG.1

FIG.2

0150451